(19) Europäisches Patentamt
European Patent Office
Office européen des brevets

(11) EP 2 599 980 A2

(12) **EUROPÄISCHE PATENTANMELDUNG**

(43) Veröffentlichungstag:
05.06.2013 Patentblatt 2013/23

(51) Int Cl.:
*F02C 6/16* $^{(2006.01)}$

(21) Anmeldenummer: 12401212.1

(22) Anmeldetag: 22.10.2012

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME

(30) Priorität: 04.12.2011 DE 102011056010
06.12.2011 DE 102011056112
03.04.2012 DE 102012102897

(71) Anmelder: Ed. Züblin AG
70567 Stuttgart (DE)

(72) Erfinder:
• **Der Erfinder hat auf seine Nennung verzichtet.**

(54) **Druckgasspeicherkraftwerk**

(57) Es wird ein Druckgasspeicherkraftwerk (3) beschrieben, das mit einem oder mehreren nur bei niedriger oder mittlerer Temperatur (weniger als 400°C) arbeitenden Wärmespeichern (8) einen guten Wirkungsgrad liefert.

Die Erfindung sieht vor, Druckgas (im einfachsten Falle Luft) von hohem Druck zu verwenden, dieses aber unter Verrichtung von Arbeit nicht ungefähr bis auf Umgebungsdruck von 1 bar zu entspannen und in die Umwelt (offenes System) zu entlassen, sondern nur bis zu einem wesentlich höheren Druck und dieses Mitteldruckgas in einem Mitteldruckgasspeicher (2) mit größerem Volumen als dem des Hochdruckgasspeichers (1) als Auffangspeicher aufzufangen (geschlossenes System). Der Mitteldruckgasspeicher (2, Auffangspeicher) dient dann als Reservoir, aus dem der Hochdruckgasspeicher (1) später wieder beladen wird. Der Auffangspeicher (2) kann auch aus mehreren Einzelspeichern bestehen.

Im Hochdruckgasspeicher (1) kann das Gas auch unter Einnahme eines nur geringen Volumens in flüssigem Zustand vorliegen. Durch Abkühlung des Hochdruckgasspeichers (1) läßt sich zudem der Druck in diesem reduzieren, sogar weit unter den des Mitteldruckgasspeichers (2). Der Hochdruck entstünde dann erst wieder durch Erwärmung und Verdampfung.

Da das Gas sich in einem abgeschlossenen System befindet, kann es auch getrocknet werden, so daß es zur Arbeitsverrichtung ohne Kondensationsprobleme bis zu tiefen Temperaturen entspannt werden kann. Auch andere Gase können statt Luft verwendet werden (z.B. Stickstoff). Auch Kohlendioxid kann in einem angepaßten System verwendet werden und dabei gleichzeitig der Endlagerung von $CO_2$ dienen. Oder es kann auch Erdgas (oder reines Methan) oder Ammoniak verwendet werden. Gase mit niedrigem Verhältnis von $C_p/C_v$ ($C_p$, $C_v$ Wärmekapazitäten bei konstantem Druck und konstantem Volumen) sind besonders günstig.

Im Falle von Kohlendioxid und Erdgas wiese das Druckgasspeicherkraftwerk (3) einen Zusatznutzen auf, wodurch es noch kostengünstiger würde.

Da das Verhältnis der Drücke von Hochdruckgas zu Mitteldruckgas deutlich kleiner ist, als das Verhältnis von Hochdruck zu Normaldruck von 1 bar, findet bei einem quasiadiabatischen Komprimieren auch nur eine deutlich geringere Erwärmung statt, die schon in einem Mittel- oder sogar Niedertemperaturwärmespeicher (8) reversibel aufgenommen werden kann. Die hohe Dichte des Hochdruckgases und auch noch die des Mitteldruckgases gestatten zudem die Verwendung von Rohrleitungen (4, 5) von relativ geringem Durchmesser.

Durch Verwendung von höheren Drücken, als bislang üblich (größer als 60 bar) kann die im Druckgas gespeicherte Energie auch noch erhöht werden, ohne Hochtemperaturwärmespeicher (8) nötig werden zu lassen.

Fig. 1

EP 2 599 980 A2

**Beschreibung**

Technisches Gebiet

Die Erfindung betrifft ein Druckgasspeicherkraftwerk für die Umwandlung von in Form von komprimiertem Gas (z.B. Luft) gespeicherter Energie in elektrische Energie, mittels einer Arbeitsmaschine, die einen elektrischen Generator antreibt.

Das Kraftwerk verwendet die beim Komprimieren des Gases während des Beladevorganges des Druckluftspeichers entstehende und in einem Wärmespeicher wenigstens teilweise zwischengespeicherte Wärme beim Entladen des Druckgasspeichers wieder wenigstens teilweise zur Erzeugung von Arbeit zum Zwecke der Gewinnung elektrischer Energie.

Stand der Technik

Der Stand der Technik kennt Druckluftspeicherkraftwerke ohne und mit teilweiser Wärmerückgewinnung. Bisherige geplante Druckluftspeicherkraftwerke mit Wärmerückgewinnung weisen zwischen Druckluftspeicher (häufig eine Salz- oder Felskaverne) und Arbeitsmaschine (häufig eine Gasturbine (Gasentspannungsturbine)) einen Wärmespeicher auf, der näherungsweise adiabatisch arbeitet und daher als adiabatischer Wärmespeicher bezeichnet wird. Um einen hohen Wirkungsgrad bei der Umwandlung thermischer in elektrische Energie zu erzielen, wird dabei bislang eine möglichst hohe Temperatur des Wärmespeichers angestrebt.

Als Material für einen Hochtemperaturwärmespeicher, welches hohe Temperaturen aushält, ist z.B. Keramik bekannt.

Ein solcher Speicher zum Zwecke der Erwärmung von Druckluft, welche in einem unterirdischen Druckluftspeicher gespeichert wurde, ist z.B. in der EP 1 857 614 B1 beschrieben.

Durch solche und andere Wärmespeicher läuft die Druckluft bei der Beladung des Druckluftspeichers vom Kompressorsystem zum Druckluftspeicher hindurch und gibt dabei ihre durch die Kompression erzeugte Wärme in ein dort befindliches Wärmespeichermaterial ab.

Oder aber die bei der Kompression erzeugte Wärme wird zuerst in einem Wärmetauscher auf ein Transportfluid übertragen, welches dann im wesentlichen drucklos oder bei stark vermindertem Druck den Wärmespeicher durchläuft und die aufgenommene Wärme an sein Speichermaterial überträgt.

Der Entladevorgang des Druckluftspeichers erfolgt ebenfalls direkt oder indirekt mittels Wärmetauscher durch den Wärmespeicher hindurch in eine Arbeitsmaschine, in der dann die Druckluft ihre um die Wärmeenergie des Wärmespeichers angereicherte Energie teilweise in mechanische Arbeit umwandelt. Teilweise wird, zur weiteren Erhöhung der Temperatur der Druckluft und damit von deren Energiegehalt, auch noch ein brennbares Gas (z.B. Erdgas) in der Druckluft verbrannt.

Die beschriebenen Druckluftkraftwerke arbeiten bei Drucken der Druckluft am Eintritt in die Arbeitsmaschine von etwa 50 bis 60 bar und am Austritt von ungefähr Normaldruck (1 bar).

Aufgrund des großen Druckgefälles benötigt der Wärmespeicher eine sehr hohe Temperatur, damit bei der (quasi)adiabatischen Expansion und Arbeitsverrichtung des Gases in den Gasturbinen keine schädlichen Kondensationsvorgänge auftreten, die die Turbinenschaufeln schädigen würden.

Der adiabatische Wärmespeicher nach Stand der Technik muß also, um die bei der Kompression der Luft beim Beladen des Druckluftspeichers entstehende Wärme aufnehmen und unter Erzielung eines hohen Wirkungsgrades wieder abgeben zu können, für hohe Temperaturen größer als 400°C, bevorzugt größer als 500°C oder sogar größer als 600°C ausgelegt sein. Diese Temperaturtoleranz folgt aus der bei der (quasi)adiabatischen Kompression der Luft entstehenden Wärme, je nachdem, auf welchen Enddruck die Luft komprimiert werden soll. Auch die Arbeitsmaschine/Turbine muß für diese Temperaturen ausgelegt sein. (Es wird in diesem Text immer von adiabatisch bzw. quasiadiabatisch gesprochen, die Vorgänge laufen in der Realität aber polytrop ab.)

Diese hohen Temperaturen in Kombination mit hohen Drücken, sowohl im Wärmespeicher, als auch in der Arbeitsmaschine und den Zuleitungen, erfordern teure Materialien, die dazu noch gegenüber Niedertemperaturmaterialien andere Nachteile aufweisen können. Die Regelung solcher Druckluftkraftwerke ist zudem steuerungstechnisch aufwendig. Auch die Betriebssicherheit ist aufgrund der hohen Drücke im Verein mit den hohen Temperaturen bedenklich.

Aufgabe der Erfindung

Aufgabe der Erfindung ist es, ein (quasi)adiabatisches Druckgasspeicherkraftwerk anzugeben, das die zuvor geschilderten Probleme nicht aufweist und nicht nur für das Gas Luft, sondern auch für viele andere Gase geeignet ist.

Gegenstand der Erfindung ist auch ein für ein solches Kraftwerk geeigneter Wärmespeicher.

Darstellung der Erfindung

Die Aufgabe wird durch die im Kennzeichen der Ansprüche 1 und 10 angegebenen Merkmale gelöst.

Erfindungsmäßig wurde erkannt, daß bei der herkömmlichen Vorgehensweise zu sehr der Blick auf den thermischen Charakter des adiabatischen Druckluftspeicherkraftwerks gelegt wird, oft sogar in falsch verstandener Weise auf die Gleichung für den thermodynamischen Carnot-Wirkungsgrad

$$\eta = (T_{hoch} - T_{tief}) / T_{hoch}$$

geschaut wurde und daher versucht wurde, möglichst hohe Wärmespeichertemperaturen zu erreichen, mit allen damit verbundenen Nachteilen wie z.B. geringerer Wärmekapazität des Speichermaterials, höherem Preis, verringerter Beständigkeit und anderem mehr.

Erfindungsgemäß wurde aber erkannt, daß es sich in Wahrheit bei einem adiabatischen Druckluftspeicherkraftwerk gar nicht um eine Wärmekraftmaschine handelt, auf die der Carnot-Wirkungsgrad als maximaler Wirkungsgrad Anwendung finden dürfte!

Vielmehr handelt es sich bei vollständiger Wärmerückführung in die Druckluft um ein Kraftwerk, das potentielle Energie (den Druck der Luft) in einer idealisierten Ausführung vollständig in Arbeit zurückführen könnte, anders als eine zyklisch arbeitende Wärmekraftmaschine, bei der auch in einer idealisierten Ausführung immer ein Teil der Wärme als nicht rückgewinnbare Energie verloren geht und die den Carnot-Wirkungsgrad nicht übertreffen kann.

Das Problem der notwendigen hohen Wärmespeichertemperatur ergibt sich nur aus der vorausgesetzten hohen adiabatischen (oder quasiadiabatischen) Komprimierung der Luft von 1 bar auf etwa 60 bar in einer Stufe ohne zwischenzeitliche Wärmeabgabe! (Die Kompression selbst kann dabei durchaus durch mehrere hintereinandergeschaltete Kompressoren erfolgen und muß nicht von einem einzigen bewerkstelligt werden.)

Daher schlägt die Erfindung vor, dieses Kompressionsverhältnis zu verringern!

Hierfür gibt es zwei erfinderische Varianten A und B:

A.) Trivialvariante: Der Maximaldruck im Druckluftspeicher wird reduziert und (als Ausgleich für die dadurch verringerte Energiedichte) das Druckluftspeichervolumen erhöht! Da die Vergrößerung des Speichervolumens relativ kostengünstig zu erreichen ist, wird das gesamte Kraftwerk trotz Kostenerhöhung des Druckluftspeichers insgesamt günstiger, weil der Wärmespeicher zwischen Druckluftspeicher und Arbeitsmaschine(n) kostengünstiger wird und auch die Arbeitsmaschine(n) selbst preiswerter wird (werden). Statt Hochdruck-, Mitteldruck- und Niederdruckturbine sind dann z.B. nur noch Mitteldruck- und Niederdruckturbine notwendig und diese können aus kostengünstigeren Materialien hergestellt sein, da sie keine so hohen Temperaturen mehr aushalten müssen.

B.) Es wird in einem abgeschlossenen System gearbeitet, bei dem das Arbeitsgas nicht in die Umgebung entlassen wird, sondern zyklisch verdichtet und wieder expandiert wird.
Auch hier gibt es zwei Untervarianten:

1.) Es wird nur das Druckverhältnis zwischen komprimiertem und entspanntem Gas verringert! Das heißt, das Druckgas (z.B. Luft) kann weiter einen hohen Druck von z.B. 60 bar (oder auch mehr) aufweisen, aber dieser wird nach der Arbeitsmaschine (den Arbeitsmaschinen) nur auf z.B. 50, 40, 30, 20, 10 oder 5 bar verringert und das Gas (z.B. Luft) entkommt nicht in die Umgebungsluft, sondern wird in einem (bevorzugt größeren) Auffangspeicher (oder auch mehreren Speichern) unter eben deutlich höherem Druck als dem Normaldruck von 1 bar aufgefangen.

2.) Das Gas wird in einem expandierbaren Speicher bei relativ konstantem Druck aufgefangen, der auch so niedrig sein kann, wie der umgebende Luftdruck, also ungefähr 1 bar.

Zu B1.)

Bei dieser Variante steigt der Druck in diesem Auffangspeicher natürlich durch die Auffüllung mit der Zeit an, bleibt aber immer hinreichend weit unter dem des Hochdruckgasspeichers. Aus diesem Auffangspeicher wird das Gas dann bei Beladung des Hochdruckgasspeicherteils wieder herausgepumpt und dabei komprimiert.

Da die Temperaturerhöhung des Gases durch Kompression im wesentlichen nur von diesem Druckverhältnis abhängt, erhitzt sich dabei das Gas weit weniger als in einem Druckluftspeicherkraftwerk nach Stand der Technik, obwohl bei einem ähnlichen oder sogar höheren Maximaldruck gearbeitet wird! Zudem weist das komprimierte Gas eine deutlich höhere Dichte auf als Gas bei Normaldruck, so daß die Rohrleitungen für das Gas einen deutlich geringeren Durchmesser aufweisen (und damit stabiler sind!). Auch die voluminöse Niederdruckturbine entfällt. Es genügen Hochdruck- und Mitteldruckturbine oder sogar nur eine Hochdruckturbine! Zudem arbeiten diese Turbinen bei wesentlich geringeren Temperaturen und können daher aus preiswerteren und dennoch stabilen Materialien hergestellt werden.

Es ist erfindungsgemäß sogar möglich, den absoluten Maximaldruck des Gases im Gasspeicher noch weiter zu steigern, wodurch sich das Volumen der Gasspeicher verringert, und gleichzeitig deren Energiedichte ansteigt!

Wird z.B. 1 Kubikmeter (ideales) Gas von 180 bar auf 2 Kubikmeter in einer idealen Hochdruckarbeitsmaschine entspannt, verrichtet es genauso viel Arbeit wie 3 Kubikmeter Gas, die von 60 bar in einer idealen Arbeitsmaschine auf 6 Kubikmeter expandiert werden, oder wie 10 Kubikmeter, die von 18 bar in einer idealen Mitteldruckarbeitsmaschine auf 20 Kubikmeter expandiert werden.

Im Falle einer adiabatischen Expansion (eines idealen Gases) verhielten sich die Temperaturen wie:

$$T_2 = \left(\frac{V_1}{V_2}\right)^{\kappa-1} * T_1 \; .$$

Dabei ist $\kappa$ das Verhältnis $C_p/C_v$ aus den spezifischen Wärmekapazitäten bei konstantem Druck ($C_p$) und konstantem Volumen ($C_v$). Für Luft (großteils zweiatomige und damit lineare Gasmoleküle) ist $\kappa$ ungefähr 1,4, so daß sich ergibt:

$$T_2 \approx \left(\frac{V_1}{V_2}\right)^{0,4} * T_1$$

Es gilt also z.B. bei einer adiabatischen Expansion von Luft auf das doppelte Volumen, daß $T_2 = (1/2)^{0,4} \cdot T_1 = 0{,}7579 \cdot T_1$.

(Luft von 423 K (150 °C) kühlt sich demnach bei adiabatischer Expansion auf das doppelte Volumen auf ungefähr 320 K (47°C) ab.)

Entspannte man bei hohem Druck nur auf das 1,5-fache Volumen, so kühlte sich dabei Luft von z.B. 373K (100°C) auf 317 K (44°C) ab, also um etwa 56 °C. In diesem Falle genügte ein "großer Topf" heißen Wassers als Wärmespeicher, durch den die Druckluft vor dem Eintritt in die Arbeitsmaschine(n) angewärmt würde. Im ersten Falle wäre ein "großer Topf" heißen Wassers unter Druck von etwa 5 bar als Wärmetauscher ausreichend, oder ein druckloser "Topf" einer hochkonzentrierten wässrigen Calciumchloridlösung oder von Glykol oder Glycerin, eventuell mit etwas Wasserzusatz zur Viskositätsminderung.

Mehratomige Gasmoleküle wie Kohlendioxid oder das Methan im Erdgas weisen von 1,4 abweichende Werte von $\kappa$ auf, Kohlendioxid, Methan, Ammoniak oder Schwefeldioxid z.B. Werte von ungefähr 1,3. Entspannte man ein solches Gas auf das doppelte Volumen, so reduzierte sich seine Temperatur nur auf

$T_2 = (1/2)^{0,3} \cdot T_1 = 0{,}8123 \cdot T_1$, das heißt von z.B. 373 K (100 °C) auf ungefähr 303 K (30 °C), also nur um ungefähr 70 °C. Bei Entspannung auf nur etwa das 1,5-fache Volumen betrüge $T_2 = (2/3)^{0,3} \cdot T_1 = 0{,}8855 \cdot T_1$, das heißt von z.B. 331 K (58 °C) auf 293 K (20 °C). Eine Entspannung auf das zweieinhalbfache Volumen liefert $T_2 = (1/2{,}5)^{0,3} \cdot T_1 = 0{,}7597 \cdot T_1$, also fast den gelichen Wert, den Luft bei einer Entspannung auf das doppelte Volumen liefert. Das gleiche, was hier für die adiabatische Entspannung gezeigt wurde, gilt gleichermaßen für die adiabatische Kompression. Man sieht also, daß es für ein Druckgasspeicherkraftwerk mit Wärmerückgewinnung in einem Wärmespeicher günstig ist, ein Arbeitsgas zu verwenden, welches ein möglichst geringes Verhältnis $\kappa = C_p/C_v$ aufweist, weil dann bei gleichem Kompressionsverhältnis der Wärmespeicher bei niedrigerer Temperatur (und damit kostengünstiger) gefahren werden kann. (Ethan, ein Erdgasbestandteil, hat ein $\kappa$ von etwa 1,19, Propan sogar nur von 1,14, Isobutan eines von lediglich 1,096! Das bedeutet, daß Propan, welches auf das 7,5-fache Volumen expandiert würde, sich temperaturmäßig so verhielte, wie Luft, die nur auf das doppelte Volumen expandierte! Bei Isobutan wäre es sogar ungefähr das 18-fache Volumen! In einem erfindungsgemäßen, ein abgeschlossenes System darstellenden Druckluftspeicherkraftwerk ist es also günstig, ein kostengünstiges Gas zu wählen, das gleichzeitig einen niedrigen Wert von $\kappa$ aufweist!)

Es gilt für den idealen Fall für Druck p und Volumen V weiterhin die Adiabatengleichung

$$p_1 \cdot V_1^{\kappa} = p_2 \cdot V_2^{\kappa} \quad \text{oder} \quad \frac{p_1}{p_2} = \left(\frac{V_2}{V_1}\right)^{\kappa}$$

Nach dieser Gleichung führt eine adiabatisch durchgeführte Verdoppelung des Volumens bei Luft zu einer Reduzierung des Druckes auf 1/2,639-tel.

Zum Vergleich hierzu Isobutan (als ideales Gas gerechnet): Der Druck des Isobutans soll ebenfalls auf 1/2,639-tel fallen. Hierzu muß das Isobutanvolumen sich gemäß obiger Formel auf das 2,434-fache erhöhen. Bei dieser Volumenvergrößerung findet eine Abkühlung auf

$T_2 = (1/2{,}424)^{0,096} \cdot T_1 = 0{,}919 \cdot T_1$ statt, also wesentlich weniger als bei Luft. Die Temperatur fiele dabei also z.B. nur von 66°C auf 20°C! Auch bei dieser Rechnung zeigt sich, daß ein Gas mit einem niedrigeren $\kappa$ für ein Druckgasspeicherkraftwerk günstiger ist, weil dieses dann nur Wärmespeicher von niedrigerer Temperatur benötigt.

In einem geschlossenen System, in dem kein Gas verloren geht, ist es darüber hinaus möglich, dieses Gas auch zu trocknen und trocken zu halten, wodurch es zu keinen schädlichen Kondensationsvorgängen mehr kommen kann und die Turbinen auch bis zu tiefen Temperaturen betrieben werden können, der Expansionsfaktor also erhöht werden kann!

Die Trocknung kann durch physikalische oder chemisch arbeitende chemische Sorbentien erfolgen, oder auch durch Ausfrieren der Feuchtigkeit erfolgen.

Ein Kubikmeter Gas , das von 180 bar auf das dreifache Volumen 3 Kubikmeter expandiert würde, erzeugte dabei so viel Energie, wie 3 Kubikmeter, die von 60 bar auf das dreifache Volumen 9 Kubikmeter expandiert würden, oder 1 Kubikmeter, der von 60 bar auf das 27 fache Volumen 27 Kubikmeter expandiert würde, dabei aber zuvor durch einen Hochtemperaturwärmespeicher auf viele hundert Grad hätte erwärmt werden müssen!

Es ist dann auch möglich, beim Beladeprozeß des Druckluftspeichers das Gas bei oder nahe Umgebungstemperatur (zwischen 0 und 50 °C) annähernd isotherm zu komprimieren und dann beim Entladen schnell adiabatisch zu entspannen, wobei das entspannte Gas negative Celsiustemperaturen erreicht, aber bei ausreichender Trocknung keine Kondensationsvorgänge stattfinden. Bei dieser Arbeitsweise verringert sich aber der Wirkungsgrad des Kraftwerks! Er läßt sich verbessern, indem man die Entspannung in mehreren Stufen über mehrere Arbeitsmaschinen verlaufen läßt (dadurch nähert man sich wieder einem isothermen Prozeß an, führt Kompression und Entspannung also wieder näherungsweise reversibel), wobei vor jeder Expansionsstufe wieder eine Aufwärmung auf Umgebungstemperatur erfolgte. Diese Aufwärmung kann z.B. in dem Wärmespeicher von Umgebungstemperatur erfolgen, in den auch die Kompressionswäre isotherm abgegeben worden war. Bei diesem Wärmespeicher kann es sich vorteilhafterweise um ein sehr großes Wasserbecken oder sogar ein Gewässer handeln, durch das das Druckgas in Rohrleitungen geführt wird. Wasser hat eine hohe Wärmekapazität und in flüssigem Zustand dank natürlicher oder Zwangskonvektion eine hohe Wärmeleitfähigkeit und kann daher Wärme sehr schnell aufnehmen und wieder abgeben.

In einem geschlossenen System ist es, wie bereits erwähnt, auch möglich, andere Gase als Luft zu verwenden (z.B. inerten Stickstoff). Auch Kohlendioxid könnte in einem angepaßten System (Kohlendioxid unter Druck ähnelt kaum noch einem idealen Gas!) verwendet werden und dabei gleichzeitig der Endlagerung von $CO_2$ dienen!

Bei hinreichend hohem Druck, den man für die jeweilige Temperatur des Druckgasspeichers aus dem Phasendiagramm von Kohlendioxid ablesen kann, verflüssigt sich das Kohlendioxid zudem und ist dann in einem sehr geringen Volumen abspeicherbar! Bei Raumtemperatur von 20 °C sind hierzu ungefähr 60 bar erforderlich. Die Dichte von flüssigem Kohlendioxid beträgt etwa 1,56 kg/Liter und liegt daher weit über den etwa 0,12 kg/Liter, die es hätte, wenn es bei 60 bar und Raumtemperatur ein ideales Gas wäre. Mit Kohlendioxid als Arbeitsgas, das zwischen einem Flüssiggasspeicher und einem Auffangspeicher durch Entlade- und Beladevorgang zyklisch hin- und herbewegt wird, läßt sich somit das Volumen des Hochdruckgasspeichers (in diesem Falle der Flüssigspeicher) gegenüber anderen Gasen ohne Phasenübergang um mehr als den Faktor 10 reduzieren, wenn ungefähr bei 60 bar gearbeitet wird. Solche Tanks können dann auch aus Metall bestehen und sich oberflächennah oder auf der Erdoberfläche befinden.

Um ein Auskondensieren von flüssigem Kohlendioxid oder sogar festem Kohlendioxidschnee bei einer Expansion zu verhindern, muß ebenso das Phasendiagramm herangezogen werde: Die Temperatur des entspannten Kohlendioxids sollte nicht unter ungefähr -55°C fallen.

Vorzugsweise wird daher das Kohlendioxid vor der Entspannung in einem Wärmespeicher erwärmt. Im Falle einer stufenweisen Enstpannung geschieht dies in mehreren Wärmespeichern oder das entspannte Gas wird nochmals durch ein anderes Leitungssystem durch den gleichen Wärmespeicher geleitet.

Es ist auch möglich, verflüssigtes Kohlendioxid im Hochdruckspeicher abzukühlen, wodurch sich der Druck im Hochdruckspeicher drastisch reduziert und der Speicher weniger stabil gebaut werden muß. Dann muß aber dieses abgekühlte verflüssigte Kohlendioxid vor der Expansion wieder stärker erwärnmt werden. Da die Abkühlung des Kohlendioxids unter die Umgebungstemperatur ("Umwelt") zusätzliche Energie benötigt (dies ist ein Prozeß, der maximal den Carnot-Wirkungsgrad besitzen kann), reduziert sich aber hierdurch der Gesamtwirkungsgrad des Druckgasspeicherkraftwerks. Dennoch kann die Abkühlung des Hochdruckspeichers wirtschaftlich Sinn machen, wenn die Zusatzkosten durch den weniger druckstabil ausgeführten Flüssigniederdruckspeicher kompensiert werden, bzw. wenn zu manchen Zeiten überschüssige elektrische Energie vorhanden ist, die verbraucht werden muß und zur Kühlung eingesetzt werden kann.

Allgemein beschreibt die Erfindung also den zyklischen Wechsel eines Gases zwischen einem Speicher, in dem es mit hoher Dichte $D_h$ vorliegt, in einen Auffangspeicher, in dem es mit einer geringeren Dichte Dg vorliegt, wobei beim Entladeprozeß des Gases vom Speicher höherer Dichte in den Speicher geringerer Dichte über mindestens eine Arbeitsmaschine Arbeit verrichtet wird und beim Beladeprozeß des Gases geringerer Dichte in den Speicher höherer Dichte von Kompressoren Arbeit verbraucht wird. Beim Kompressionsvorgang erzeugte Wärme wird dabei in mindestens einem Wärmespeicher zwischengespeichert und dem Gas für den Expansionsvorgang wieder zur Verfügung gestellt.

Es könnte auch Erdgas (oder reines Methan) als Speichergas verwendet werden. Auch die schon bestehenden zahlreichen unter Druck stehenden unterirdischen Erdgasspeicher ließen sich dadurch erfindungsgemäß zu Druckgasspeicherkraftwerken umbauen, bei denen zur Energieerzeugung (Entladevorgang) das Erdgas von einem Druckspeicher mit hohem Druck über Wärmespeicher und Arbeitsmaschinen in einen Auffangspeicher geringeren Druckes flösse und zur Energiespeicherung (Beladevorgang) wieder in umgekehrter Richtung.

In den letzten beiden Fällen weist das Druckgasspeicherkraftwerk einen Zusatznutzen auf, was große Kostenvorteile bringt!

Das Erdgas kann anstatt in einem Hochdruckspeicher auch mit hoher Dichte als gekühltes Flüssiggas (LNG) in großen Niederdrucktanks (üblich sind z.B. 250000 Kubikmeter Inhalt) gespeichert werden und zum Zwecke der Arbeitsverrichtung während des Entladeprozesses über eine oder mehrere Arbeitsmaschinen zuvor erwärmt und nach der Expansion und Arbeitsverrichtung in einem großen unterirdischen Auffangspeicher (in dem es dann mit geringerer Dichte als der von Flüssiggas vorliegt!) unter mittlerem oder immer noch hohem Druck aufgefangen werden. Von diesem Auffangspeicher aus wird es dann wieder später im Beladeprozeß des Kraftwerks unter Kompression und Kühlung in die Flüssigtanks zurückgepumpt.

Wie schon beim gekühlten flüssigen Kohlendioxid ist auch hier ein Prozeß (die Abkühlung gegenüber der Umgebung) beteiligt, der Entropie erzeugt und daher den Wirkungsgrad des Gesamtkraftwerkes verringert, was aber je nach wirtschaftlichen Gegebenheiten des Standortes trotzdem sinnvoll sein kann.

Eine Erstbefüllung der Gasspeicher des Kraftwerkes kann mit denselben Kompressoren erfolgen, die auch später das Gas im abgeschlossenen System vom niedrigeren Druck des Auffangspeichers wieder auf den höheren Druck des Hochdruckspeichers bringen, falls diese Kompressoren für diesen Druckbereich geeignet sind.

Ansonsten können auch einmalig (z.B. leihweise) zusätzliche Niederdruckbereichkompressoren eingesetzt werden (auch mobile sind möglich), die die erste Kompressionsstufe auf den niedrigeren Druck des Auffangspeichers bewerkstelligen. Diese Kompressoren werden später nicht mehr benötigt und können abgezogen werden.

Zu B2.) Bei einem expandierbaren Auffangspeicher kann das abgeschlossene System auch bis auf Umgebungsdruck 1 bar entspannt werden, wenn der expandierbare Auffangspeicher hinreichend groß ist. Die Temperatur der Wärmespeicher läßt sich dennoch gegenüber dem Stand der Technik verringern, wenn man mehrstufig arbeitet und Expansionen des Gases bis in den negativen Celsiusbreich gestattet oder/und wenn man Arbeitsgase mit geringem

$$\kappa= C_p/C_v \text{ verwendet.}$$

Es ist sowohl gemäß Ausführung A.) als auch gemäß Ausführung B.) möglich, die Expansion des Gases in mehreren Stufen durchzuführen und das nach jeder arbeitsverrichtenden Stufe teilexpandierte Gas in einem oder mehreren Wärmespeichern wieder aufzuwärmen, bevor dieses teilexpandierte Gas dann die nächste arbeitsverichtende Expansion durchführt. Auf diese Weise kann der Temperaturunterschied zwischen dem in die Arbeitsmaschine eintretenden und aus ihr austretenden Gas weiter reduziert werden, und es genügen schon Wärmespeicher mit niedrigen Temperaturen, die billig sind und bei hoher Wärmekapazität schnelle Wärmeübertragung gewährleisten. Insbesondere sind dies Flüssigwärmespeicher (vor allem auf Wasser oder Polyalkoholen basierende) oder Phasenwechselwärmespeicher.

Wenn das Expansionsverhältnis des Gases in jeder Stufe gleich oder sehr ähnlich gewählt wird, kann auch das nach jeder Stufe teilexpandierte Gas wieder durch den gleichen Wärmespeicher geleitet werden (allerdings wegen des Druckunterschiedes auf getrenntem Weg).

Bei Verwendung von Gas, das unter sehr hohem Druck steht, verringert sich der Durchmesser der Rohre im Wärmetauscher, und es erhöht sich dadurch deren Stabilität. Die niedere Temperatur des Wärmespeichers läßt die Materialien des Kraftwerks zudem stabil bleiben.

Es ist von Vorteil, wenn für die arbeitsverrichtende Entspannung des Gases Arbeitsmaschinen eingesetzt werden, die beim energieverbrauchenden Beladen des Speichers mit der höheren Dichte (z.B. Hochdruckgasspeicher) auch als Kompressoren eingesetzt werden können.

Die Figuren stellen schematisch die Erfindung dar, die aus üblichen Komponenten nach Stand der Technik zusammengesetzt werden kann.

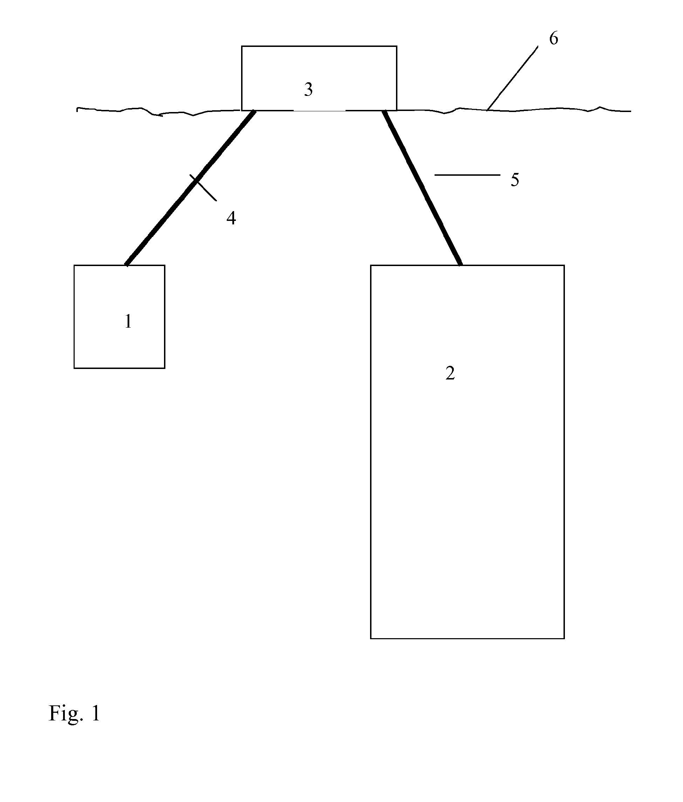

**Fig. 1** zeigt die grundlegende Idee der Erfindung gemäß der nichttrivialen Variante B1.

Im dargestellten Falle befinden sich beide Gasspeicher **1** und **2** unterhalb der Erdoberfläche **6** und das Kraftwerk **3** befindet sich oberhalb der Erdoberfläche **6.** Prinzipiell können die Speicher in dieser und den weiteren Figuren auch oberirdisch angeordnet sein, doch sind unterirdische Ausführungen bevorzugt, weil von der Bevölkerung besser akzeptiert und teilweise auch naturgegeben schon vorhanden (z.B. alte Erdgaslagerstätten) oder leicht herstellbar (Salzkavernen).

Oberirdisch sind vor allem gekühlte Flüssiggastanks denkbar, da diese unter keinem hohen Druck stehen. Ein Auffangspeicher mit niedrigem Druck nimmt relativ viel Volumen ein. Er wäre z.B. als Kunststoffhülle denkbar, doch nur in sehr entlegenen Gegenden oder unter Wasser akzeptabel (Variante B2). Das Kraftwerk **3** enthält eine oder mehrere Arbeitsmaschinen **7,** einen oder mehrere Wärmespeicher **8,** eine oder mehrere Kompressionsvorrichtungen **9,** einen oder mehrere Generatoren **10,** eventuell eine oder mehrere Kühlanlagen zum Herunterkühlen komprimierten Gases unter die Umgebungstemperatur, eventuell eine oder mehrere Aufheizvorrichtungen zum Aufheizen des abgekühlten verflüssigten Gases auf mindestens ungefähr die Temperatur des Gases im Speicher **2** mit der niedrigeren Dichte (Auffangspeicher), eventuell eine Gastrocknungsvorrichtung.

Das Kraftwerk und die Speicher sind über Verbindungsleitungen **4** und **5** verbunden. Bei den Verbindungsleitungen **4** bzw. **5** kann es sich um jeweils eine einzige Leitung handeln, die in beide Richtungen vom Gas passiert wird, oder aber die Verbindungsleitungen **4** bzw. **5** stellen mindestens zwei Leitungen (4a, 4b, ...und 5a, 5b,...) dar, von denen eine dem Transport des Gases vom Speicher **1** bzw. **2** zum Kraftwerk **3** und die andere dem Transport des Gases vom Kraftwerk **3** zum Speicher **1** bzw. **2** dient.

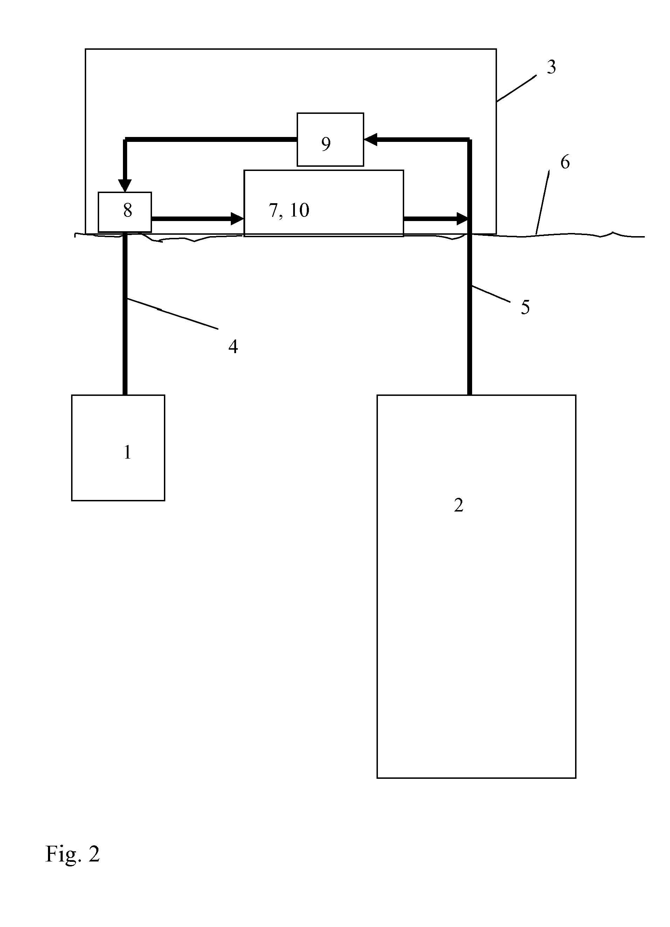

In **Fig. 2** ist für einen einfachen Fall eines erfindungsgemäßen zyklisch arbeitenden Druckluftspeicherkraftwerks das Kraftwerk **3** in Untereinheiten aufgelöst schematisch dargestellt. Das Gas aus dem Auffangspeicher **2** wird in einer Kompressionsvorrichtung **9** einstufig komprimiert, die dabei erzeugte Wärme wird dabei in einen Nieder- oder Mitteltemperaturwärmespeicher **8** bis zur späteren Wiederverwendung wenigstens größtenteils abgegeben und das komprimierte Gas dann in einem Hochdruckgasspeicher **1** bis zur weiteren Verwendung abgespeichert. Die Pfeile geben die Fließrichtung des Gases in den Zuleitungen **4** und **5** wieder, die hier im Inneren des Kraftwerks **3** verzweigt und durch Ventile geregelt sind. Bei der Entladung des Hochdruckspeichers **1** fließt das komprimierte Gas zuerst durch den Wärmespeicher **8** und wird in diesem im idealisierten Falle auf eine solche Temperatur gebracht, daß es bei der anschließenden (im idealisierten Falle) adiabatischen arbeitsverrichtenden Entspannung ungefähr mit der Temperatur des Gases im Auffangspeicher austritt.

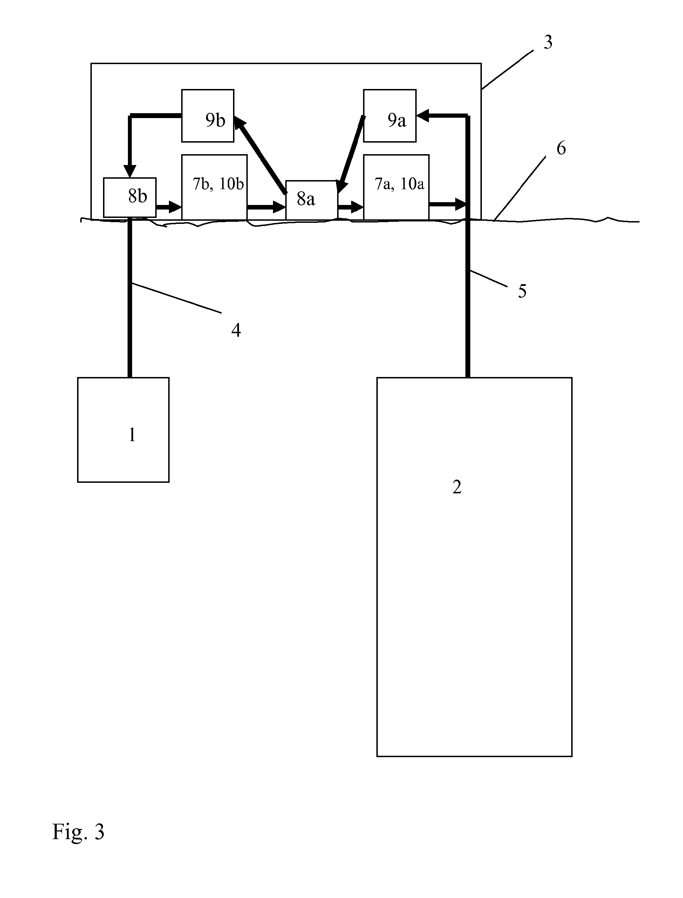

In **Fig. 3** ist schematisch beispielhaft für ein mehrstufig arbeitendes erfindungsgemäßes Druckluftspeicherkraftwerk ein zweistufig arbeitendes dargestellt. Je mehr Stufen verwendet werden, umso geringer kann die Maximaltemperatur des Speichermaterials in den Wärmespeichern **8** sein.

Wenn das Druckverhältnis des Gases zwischen dem Hochdruckspeicher **1** und dem Auffangspeicher **2** klein genug ist, so kann durch die mehrstufige Ausführung der Erfindung in vielen Fällen ein sehr kostengünstiger Wärmespeicher **8** auf Wasserbasis eingesetzt werden. Durch Zusätze im Wasser (z.B. Calciumchlorid, Glykol oder Glycerin) kann hierbei dessen Siedetemperatur erhöht werden. Durch eine Druckausführung des Wärmespeichers **8** läßt sich die Siedetemperatur zusätzlich steigern.

Eine ideale adiabatische Prozeßführung von Luft zwischen 60 und 10 bar führte z.B. gemäß den weiter vorne angegebenen Adiabatengleichungen einstufig zu einer Volumenänderung auf das 3,596-fache Volumen. Außerdem führte dies zu einer auf das 0,599-fache abgefallenen absoluten Temperatur. Luft würde sich bei einer solchen Expansion also von 489 K (216°C) auf 293 Kelvin (20°C) abkühlen. Der Wärmespeicher **8** müßte also für etwa 220°C ausgelegt sein. Dies könnte auch schon ein unter Druck (ungefähr 25 bar) stehender Wasserspeicher sein.

Würde dieser Prozeß zweistufig durchgeführt mit gleichem Druckverhältnis in jeder Stufe, so bedeutete dies in der ersten Stufe eine Reduzierung des Druckes von 60 auf etwa 24,5 bar und in der zweiten Stufe von 24,5 bar auf 10 bar, also jeweils auf 1/2,45-tel. Dabei änderte sich das Volumen in jeder Stufe auf das 1,87-fache. Die Temperatur der Luft würde bei jeder solchen Expansion auf das 0,774-fache abfallen, also z.B. von 379 Kelvin (106°C) auf 293 Kelvin (20°C). Eine solche Expansion kann wärmetechnisch sehr einfach durch drucklose Wärmespeicher **8a, 8b** auf Wasserbasis mit einem siedepunktserhöhenden Zusatz (z.B. Calciumchlorid) abgedeckt werden.

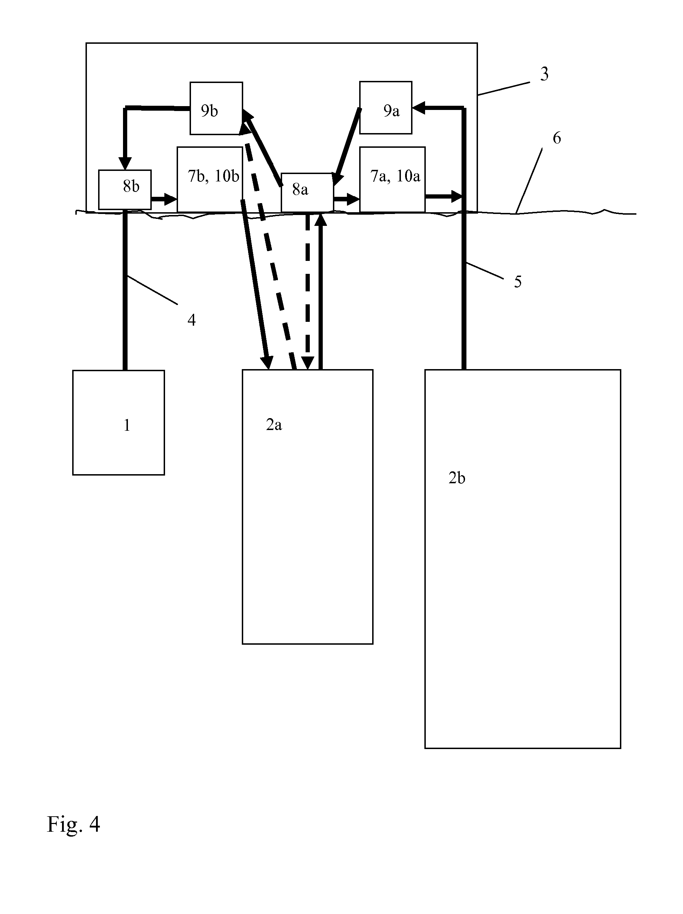

**Fig. 4** zeigt (als einfaches Beisspiel für ein mehrstufiges Kraftwerk) ein zweistufiges Druckluftspeicherkraftwerk, bei dem die Druckluft nach der ersten Stufe in einem Zwischenauffangsspeicher **2a** aufgefangen wird, bevor sie zur weiteren Arbeitsverrichtung in die nächste Stufe weitergeleitet wird. Der Zwischenauffangspeicher **2a** kann das Gas aus dem Hochdruckspeicher **1** zu einem großen Teil aufnehmen, in diesem Falle muß er groß sein. Er kann aber auch deutlich kleiner ausgeführt sein und nur der Druckluftpufferung dienen, weil er Druckschwankungen abzufedern vermag. Vor allem ein kleiner Zwischenauffangspeicher **2a** kann auch einfach oberirdisch angeordnet sein.

Das Gas aus dem Hochdruckspeicher **1** wird zuerst in einem Wärmespeicher **8b** erwärmt, bevor es in einer Arbeitsmaschine **7b** Arbeit verrichtet und diese mit geringerem Druck verläßt. Danach fließt es zuerst in den Zwischenauffangspeicher **2a**, in dem es entweder eine Weile verbleibt, oder aus dem es direkt in den Wärmespeicher **8a** vor derzweiten Arbeitsmaschine **7a** weiterfließt. Die Arbeitsmaschine **7a** verläßt es dann mit weiter vermindertem Druck in Richtung Auffangspeicher **2b.**

Aus dem Auffangspeicher **2b** wird es zur Beladung des Hochdruckspeichers **1** zuerst in einen ersten Kompressor **9a** geleitet, den es verdichtet und erhitzt verläßt und dann den Wärmespeicher **8a** durchströmt, in dem es seine Wärme ganz oder größtenteils abgibt. Aus diesem Wärmespeicher **8a** geht es dann zum zweiten Kompressor **9b** und von diesem in verdichteter Form in den nächsten Wärmespeicher **8b**. (Alternativ kann das Gas aus dem Wärmespeicher **8a** auch erst einmal in den Zwischenauffangspeicher **2a** fließen und von diesem aus dann weiter in den Kompressor **9b**.) Im Wärmespeicher **8b** gibt das auf Enddruck verdichtete Gas erneut seine Wärme ab und fließt dann in den Hochdruckspeicher **1**.

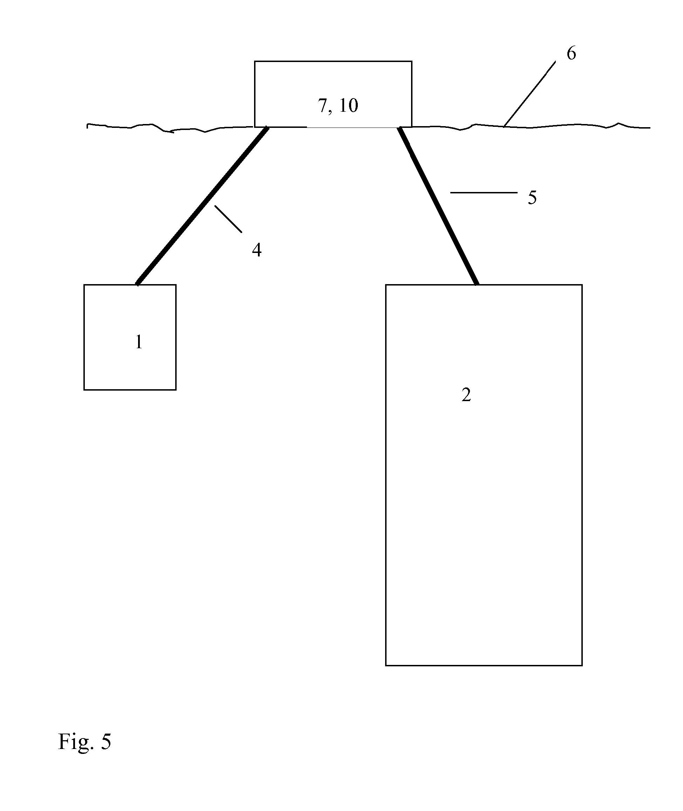

**Fig. 5** zeigt ein einstufiges Kraftwerk, bei dem, unter deutlicher Verringerung des Wirkungsgrades, auf Wärmespeicher verzichtet wurde. Das Gas im Speicher ist so stark getrocknet, daß es bei einer (quasi)adiabatischen Entspannung trotz der tiefen Temperaturen in der Arbeitsmaschine **7** nicht zu Kondensationsproblemen kommen kann. Das Gas fließt also ohne Erwärmung in einem Wärmespeicher direkt vom Hochdruckspeicher **1** in die Arbeitsmaschine **7** und von dieser aus in den Auffangspeicher **2**. Da es dabei eine tiefe Temperatur hat, paßt mehr davon in den Auffangspeicher **2**.

Beim Beladen des Hochdruckspeichers **1** ist das Gas nach der Kompression erhitzt. Man kann es direkt in den Hochdruckspeicher **1** einleiten oder auch zuvor in einem Luft- oder Wasserkühler ungefähr auf Umgebungstemperatur kühlen. Ersteres wird man tun, wenn man ein baldiges Entladen erwartet, da man dann eine Restwärme des Gases ausnutzen kann. Letzteres wird man tun, wenn man den Hochdruckspeicher **1** dichter beladen möchte.

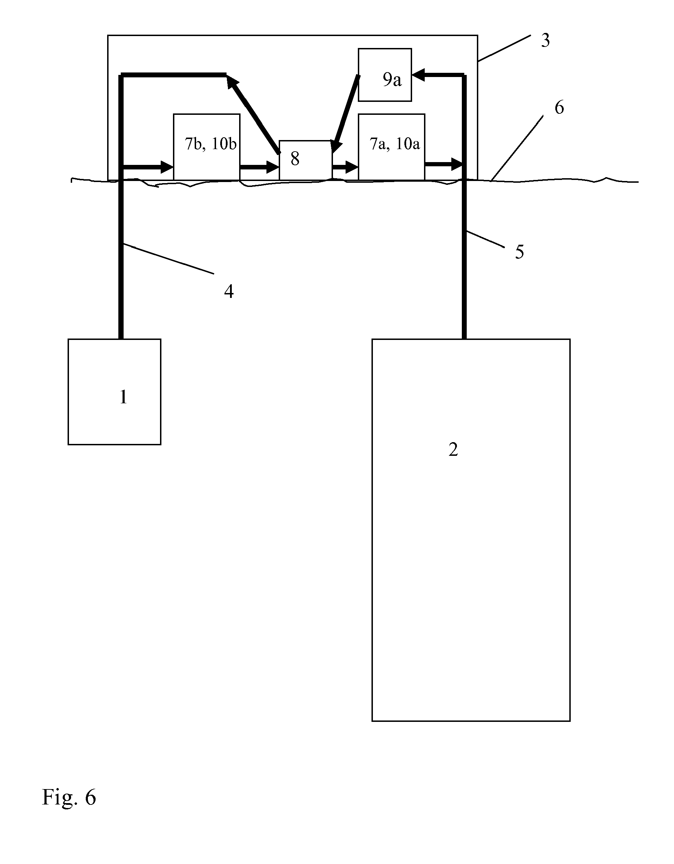

**Fig. 6** zeigt ein Druckluftspeicherkraftwerk **3,** welches einstufig beladen, aber zweistufig entladen wird. (Verallgemeinert ein Kraftwerk, bei dem die Zahl der Stufen, in denen es beladen wird, geringer ist, als die Zahl der Stufen, in denen es entladen wird.) Die einstufig erzeugte Kompressionswärme wird in einem Wärmespeicher **8** aufgenommen und zwischengespeichert und das

Gas dahinter gleich in den Hochdruckspeicher **1** geleitet. Beim Entladen wird das (bevorzugt getrocknete) Gas zuerst durch eine Arbeitsmaschine **7b** geleitet und das aus dieser austretende abgekühlte Gas dann durch den Wärmespeicher **8** geleitet, in dem es die zuvor zwischengespeicherte Wärme wieder aufnimmt und dann in einer folgenden Arbeitsmaschine **7a** erneut Arbeit verrichtet. Hinter dieser Arbeitsmaschine **7a** wird das Gas in den Auffangspeicher **2** geleitet.

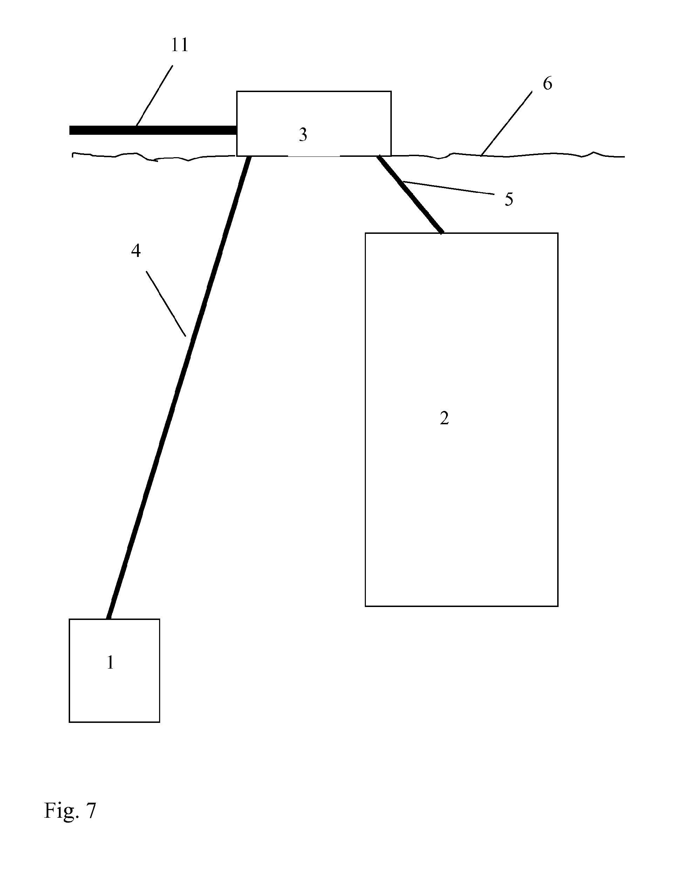

**Fig. 7** zeigt ein Druckerdgasspeicherkraftwerk **3,** das einstufig oder mehrstufig ausgeführt sein kann. Obwohl das Druckerdgasspeicherkraftwerk **3** an sich auch wie ein abgeschlossenes System arbeitet, so dienen seine Gasspeicher **1, 2** , bevorzugt der mit der niedrigeren Dichte (dem niedrigeren Druck) dennoch auch als Gasspeicher im Erdgasversorgungsnetz. Das Druckerdgasspeicherkraftwerk **3** ist daher über eine Pipeline **11** an das Erdgasversorgungsnetz angebunden. Bereits bestehende Erdgasspeicher **1, 2** lassen sich einfach zu Druckerdgasspeicherkraftwerken **3** erweitern, es müssen lediglich mindestens zwei Gasspeicher **1, 2** vorhanden sein, die über Leitungen **4, 5** mit dem Kraftwerk **3** verbunden sind und die Gasspeicher **1, 2** müssen bei unterschiedlichen Drücken gefahren werden. Üblicherweise wird der tiefergelegene Speicher **1** den höheren Druck aufweisen.

In Deutschland werden ungefähr 20 Mrd. Kubikmeter Erdgas in Speichern vorrätig gehalten, in Österreich 5 Mrd.. In Rehden in Niedersachsen lagern auf 8 Quadratkilometern in drei ausgeförderten Lagerstätten 4 Mrd. Kubikmeter in 2 km Tiefe.

Ein Druckluftspeicher von 100.000 Kubikmetern Inhalt enthält bei durchschnittlich 60 bar ungefähr 6 Mio. Kubikmeter Luft. Wird von 65 bis auf 55 bar entladen (also ungefähr ein Sechstel entnommen), und die entnommene Luft auf 1 bar ideal entspannt, so werden dadurch ungefähr 400 Mio Kilojoule (400 Mrd. Joule) Energie als Arbeit frei.

1% des deutschen Erdgases (200 Mio.Kubikmeter), das von durchschnittlich 180 bar in Hochdruckspeichern auf 60 bar in Auffangspeichern entspannt würde, würde 20 Mrd. Kilojoule (20 Billionen Joule) Energie als Arbeit freisetzen, also so viel, wie aus 50 Druckluftspeichern mit 100.000 Kubikmetern Inhalt.

Bezugszeichenliste

| 1 | Speicher mit Gas höherer Dichte bzw. höheren Druckes (Hochdruckspeicher) |
|---|---|
| 2, 2a, 2b | Speicher mit Gas geringerer Dichte bzw. geringeren Druckes (Auffangspeicher) |
| 3 | Kraftwerk mit Arbeitsmaschine(n), Generator(en), Kompressionsvorrichtung(en), Wärmespeicher(n), eventuell Kühlvorrichtung(en), eventuell Aufheizvorrichtung(en), eventuell Gastrocknungsvorrichtung(en) |
| 4 | Gasleitung zwischen Speicher mit hoher Dichte und Kraftwerk 3 |
| 5 | Gasleitung zwischen Kraftwerk 3 und Speicher mit geringerer Gasdichte bzw. geringerem Druck |
| 6 | Erdoberfläche |
| 7, 7a, 7b | Arbeitsmaschine (z.B. Gasexpansionsturbine) |
| 8, 8a, 8b | Wärmespeicher |
| 9, 9a, 9b | Kompressionsvorrichtung |
| 10, 10a, 10b | Generator zur Erzeugung elektrischer Energie |
| 11 | Erdgaspipeline zum Versorgungsnetz |

**Patentansprüche**

1. Verfahren zum Betrieb eines zyklisch zwischen einem Beladevorgang und Entladevorgang arbeitenden Druckgasspeicherkraftwerks (3), bei dem ein Gas in einem im wesentlichen abgeschlossenen System einen zyklischen Wechsel zwischen einem Speicher (1), in dem es mit hoher Dichte $D_h$ vorliegt, und einem Auffangspeicher (2), in dem es mit einer geringeren Dichte Dg vorliegt, ausführt, wobei beim Entladeprozeß des Gases vom Speicher (1) höherer Dichte in den Auffangspeicher (2) geringerer Dichte über mindestens eine Arbeitsmaschine (7) Arbeit verrichtet wird und beim Beladeprozeß des Gases aus dem Auffangspeicher (2) geringerer Dichte in den Speicher (1) höherer Dichte von Kompressoren (9) Arbeit verbraucht wird, und wobei beim Kompressionsvorgang erzeugte Wärme in mindestens einem Wärmespeicher (8) zwischengespeichert wird und dem Gas für den Expansionsvorgang wieder zur Verfügung gestellt wird.

2. Verfahren nach Anspruch 1, **dadurch gekennzeichnet, daß** bei dem Verfahren das Gas im Speicher (1) mit der höheren Dichte $D_h$ bei einem höheren Druck vorliegt, als im Speicher (2) mit der geringeren Dichte $D_g$.

3. Verfahren nach Anspruch 1, **dadurch gekennzeichnet, daß** bei dem Verfahren das Gas im Speicher (1) mit der höheren Dichte $D_h$ in gekühltem flüssigen Zustand bei niedrigerem Druck vorliegt als das im gasförmigen Zustand vorliegende Gas im Speicher (2) mit der geringeren Dichte Dg und daß das gekühlte flüssige Gas vor Eintritt in die erste oder einzige Arbeitsmaschine (7) so stark erwärmt wird, daß es einen Druck aufweist, der größer ist als der Druck im Speicher (2) mit der niedrigeren Dichte $D_g$.

4.  Verfahren nach mindestens einem der Ansprüche 1 bis 3,
    **dadurch gekennzeichnet, daß** das Gas vor Beginn des Expansionsvorganges eine Temperatur aufweist, die gleich oder höher ist als die Temperatur des Gases im Speicher (2) mit der geringeren Dichte $D_g$.

5.  Verfahren nach mindestens einem der Ansprüche 1 bis 4,
    **dadurch gekennzeichnet, daß** die arbeitsverrichtende Expansion des Gases einstufig erfolgt.

6.  Verfahren nach mindestens einem der Ansprüche 1 bis 5,
    **dadurch gekennzeichnet, daß** die arbeitsverrichtende Expansion des Gases mehrstufig erfolgt, wobei nach jeder Expansion das expandierte Gas in einem Wärmespeicher (8) wieder aufgewärmt wird, der zuvor beim Komprimieren der Luft erzeugte Wärme zwischengespeichert hat.

7.  Verfahren nach mindestens einem der Ansprüche 1 bis 6,
    **dadurch gekennzeichnet, daß** die arbeitsverbrauchende Kompression des Gases ein- oder mehrstufig erfolgt.

8.  Verfahren nach mindestens einem der Ansprüche 1 bis 7,
    **dadurch gekennzeichnet, daß** bei jeder Stufe der Expansion nur auf ein solches Druckverhältnis zwischen Eintritt in die Arbeitsmaschine (7) und Austritt aus der Arbeitsmaschine (7) entspannt wird, daß Niedertemperaturwärmespeicher (8) oder Mitteltemperaturwärmespeicher (8) mit Speichermaterialtemperaturen von weniger als 400 °C zur nahezu vollständigen Rückübertragung der bei der Kompression erzeugten Wärme ausreichend sind.

9.  Verfahren nach mindestens einem der Ansprüche 1 bis 8,
    **dadurch gekennzeichnet, daß** Luft, Stickstoff, Erdgas, Kohlendioxid oder Ammoniak als Betriebsgas verwendet werden.

10. Druckgasspeicherkraftwerk (3) zur Verwendung nach mindestens einem der Ansprüche 1 bis 9,
    **dadurch gekennzeichnet, daß** es, was das Betriebsgas betrifft, ein im wesentlichen abgeschlossenes System darstellt und einen Gasspeicher (1) mit höherer Dichte und einen Gasspeicher (2) mit niedrigerer Dichte aufweist, zwischen denen eine oder mehrere Verbindungen (4, 5) bestehen, die dem Gas den Wechsel zwischen den zwei Speichern (1, 2) ermöglichen,
    und daß es in den Verbindungen (4, 5) mindestens eine Arbeitsmaschine (7) und eine Kompressionsmaschine (9) aufweist, sowie mindestens einen Wärmespeicher (8), der beim Komprimieren der Luft entstehende Wärme wenigstens größtenteils zwischenspeichert.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1857614 B1